# EUROPÄISCHE PATENTSCHRIFT

(11) **EP 1 827 732 B1**
(45) Veröffentlichungstag und Bekanntmachung des Hinweises auf die Patenterteilung: **19.03.2008**
(21) Anmeldenummer: 05804561.8
(22) Anmeldetag: 14.11.2005
(51) Int. Cl.: B21K 1/30, F16D 23/02, B22F 5/08

(54) **GESINTERTER KUPPLUNGSRING**
SINTERED COUPLING RING
BAGUE D'ACCOUPLEMENT FRITTEE

(30) Priorität: 23.12.2004 AT 21532004
(43) Veröffentlichungstag der Anmeldung: 05.09.2007
(73) Patentinhaber: Miba Sinter Austria GmbH, 4663 Laakirchen (AT)
(72) Erfinder: NELBÖCK, Günter, 4664 Oberweis (AT); WEIERMAIR, Alexander, A-4653 Eberstalzell (AT); HEITZINGER, Franz, A-4654 Bad Wimsbach/Neydharting (AT)
(74) Vertreter: Hübscher, Helmut
(86) Internationale Anmeldenummer: PCT/AT2005/000451
(87) Internationale Veröffentlichungsnummer: WO 2006/066287

(56) Entgegenhaltungen:
- WO-A-01/08838
- US-A- 5 960 925
- PATENT ABSTRACTS OF JAPAN Bd. 016, Nr. 262 (M-1265), 15. Juni 1992 (1992-06-15) -& JP 04 064748 A (SUZUKI MOTOR CORP), 28. Februar 1992 (1992-02-28)

## Beschreibung

### Technisches Gebiet

Die Erfindung bezieht sich auf einen gesinterten Kupplungsring mit einem Kranz von Kupplungszähnen, die keilförmige, sich in einer Axialebene schneidende Stirnflächen und unter einem Neigungswinkel vom Zahnrücken gegen den Zahnfuß abfallende Flanken aufweisen, wobei die Flanken ausgehend von einer einspringenden, achsnormalen Schulter rückgenommen sind.

### Stand der Technik

Schaltgetriebe für Kraftfahrzeuge weisen mit einer Schaltmuffe zusammenwirkende Kupplungsringe auf, deren Kupplungszähne auf der der Schaltmuffe zugewandten Seite dachartig verlaufende, keilförmige Stirnflächen bilden, die das Eingreifen der Klauen der Schaltmuffe in den Zahnkranz des Kupplungsringes erleichtern. Durch eine Flankenrücknahme der Kupplungszähne wird die Eingriffsstellung der Klauen der Schaltmuffe in axialer Richtung gesichert. Zur Herstellung der Flankenrücknahme werden bei einer pulvermetallurgischen Herstellung der Kupplungsringe die Kupplungszähne nach einem Sintern des Kupplungsringes zwischen zwei axial gegeneinander gepreßten Formteilen eines Formwerkzeuges einer Preßformung unterworfen. Um eine Gratbildung im Bereich der Teilungsebene des Formwerkzeuges und damit eine Nachbearbeitung des Kupplungsringes zu vermeiden, wurde bereits vorgeschlagen (WO 01/08838 A1), daß beim Formpressen der Flankenrücknahmen im Übergangsbereich zwischen den Flanken und den keilförmigen Stirnflächen eine flankenseitig einspringende, in der Teilungsebene der Formwerkzeuge liegende Schulter mit einem abgerundeten Übergang zu den keilförmigen Stirnflächen in die Flanken der Kupplungszähne eingedrückt wird. Aufgrund der einspringenden Schulter kann im Übergangsbereich von den keilförmigen Stirnflächen zu den Flanken keine die Eingriffsbewegung der Klauen der Schaltmuffe beeinträchtigende, gratartige Materialanhäufung auftreten. Die einspringenden Schultern haben auf die Eingriffsbewegung der Klauen der Schaltmuffe in den Kranz der Kupplungszähne keinen Einfluß. Voraussetzung für ein solches vorteilhaftes Formpressen des gesinterten Kupplungsringes ist allerdings eine bezüglich einer axialen Ebene symmetrische Ausbildung der Kupplungszähne. Eine asymmetrische Anordnung der keilförmigen Stirnflächen der Kupplungszähne bringt jedoch bei einer vorgegebenen Drehrichtung Vorteile bezüglich des Schaltvorganges und der Belastung der keilförmigen Stirnflächen mit sich, weil die für die Führung der Klauen der Schaltmuffe maßgebenden Stirnflächen der Kupplungszähne eine entsprechend längere Gleitfläche bilden.

### Darstellung der Erfindung

Der Erfindung liegt somit die Aufgabe zugrunde, einen Kupplungsring der eingangs geschilderten Art so auszugestalten, daß die Flankenrücknahmen trotz einer asymmetrischen Ausbildung der keilförmigen Stirnflächen durch ein Formpressen des gesinterten Kupplungsringes hergestellt werden können.

Die Erfindung löst die gestellte Aufgabe dadurch, daß die Schnittebenen zwischen den keilförmigen Stirnflächen außerhalb der Zahnmitte verlaufen und daß die gegeneinander axial versetzen Schultern der beiden Flanken der Kupplungszähne die rückgenommenen Flanken von einem an die Stirnflächen anschließenden, achsparallelen, im wesentlichen dreieckförmigen Flankenteil trennen.

Da zufolge dieser Maßnahme die einspringenden Schultern nicht entlang des geneigt verlaufenden Überganges von den keilförmigen Stirnflächen zu den Flanken, sondern entlang einer achsnormalen Ebene verlaufen, so daß die Schultern die rückgenommenen Flanken von einem an die Stirnflächen anschließenden, achsparallelen, im wesentlichen dreieckförmigen Flankenteil trennen, können vorteilhafte Voraussetzungen für ein Formpressen der rückgenommenen Flanken trotz der asymmetrischen Ausbildung der keilförmigen Stirnflächen sichergestellt werden, weil die Trennfläche zwischen den beiden Formteilen eines Formwerkzeuges im Flankenbereich aus achsnormalen, ebenen Abschnitten gebildet werden kann, zwischen denen die axiale Versetzung der Schultern überbrückende Verbindungsflächen vorzusehen sind. Die im wesentlichen dreieckförmigen, achsparallelen Flankenteile im Anschluß an die keilförmigen Stirnflächen behindern weder den Eingriff der Klauen der Schaltmuffe noch deren axiale Sicherung durch die rückgenommenen Zahnflanken.

Ausgehend von einem gesinterten Kupplungsring mit achsparallelen Zahnflanken kann die Flankenrücknahme aufgrund der axial gegeneinander versetzten, jeweils entlang einer achsnormalen Ebene verlaufenden Schultern mit Hilfe eines Formwerkzeuges aus zwei axial gegeneinander preßbaren Formteilen hergestellt werden, von denen einer die Hohlform für die Kupplungszähne im Bereich der keilförmigen Stirnflächen und der andere die Hohlform für die Kupplungszähne im Bereich der rückgenommenen Flanken bilden, wobei die Teilungsfläche zwischen den beiden Formteilen entlang der die rückgenommenen Flanken begrenzenden achsnormalen Schultern verläuft. Wesentlich ist, daß die Teilungsfläche zwischen den beiden Formteilen aus ebenen Abschnitten zusammengesetzt ist, die im Flankenbereich entlang der einspringenden Schultern achsnormal und im Bereich der Zahnrücken und der Zahnlücken zwischen diesen gegeneinander axial versetzten Abschnitten entsprechend der axialen Versetzung zur Achsrichtung geneigt verlaufen. Mit einer solchen Teilungsfläche können nicht nur die Flankenrücknahmen mit den einspringenden Schultern nachträglich geformt werden, sondern auch sonst erforderliche Zentriermaßnahmen für die Formteile des Formwerkzeuges entfallen, weil durch die im Bereich der Zahnrücken und der Zahnlücken gegensinnig geneigt verlaufenden Abschnitte der Teilungsfläche eine selbstständige, gegenseitige Zentrierung der Formteile gegeben ist, was sich vorteilhaft auf die Herstellungstoleranzen der Flankenrücknahmen auswirkt.

### Kurze Beschreibung der Zeichnung

In der Zeichnung ist der Erfindungsgegenstand beispielsweise dargestellt. Es zeigen
- Fig. 1: einen erfindungsgemäßen gesinterten Kupplungsring ausschnittsweise in einer Draufsicht auf die Abwicklung des Kupplungszahnkranzes,
- Fig. 2: eine der Fig. 1 entsprechende Darstellung des gesinterten Kupplungsringes zwischen den teilweise geöffneten Formteilen eines Formwerkzeuges,
- Fig. 3: einen Schnitt nach der Linie III-III der Fig. 2 und
- Fig. 4: eine Stirnansicht des Formteils mit der Hohlform für die Kupplungszähne im Bereich der rückgenommenen Flanken ausschnittsweise in einem kleineren Maßstab.

### Weg zur Ausführung der Erfindung

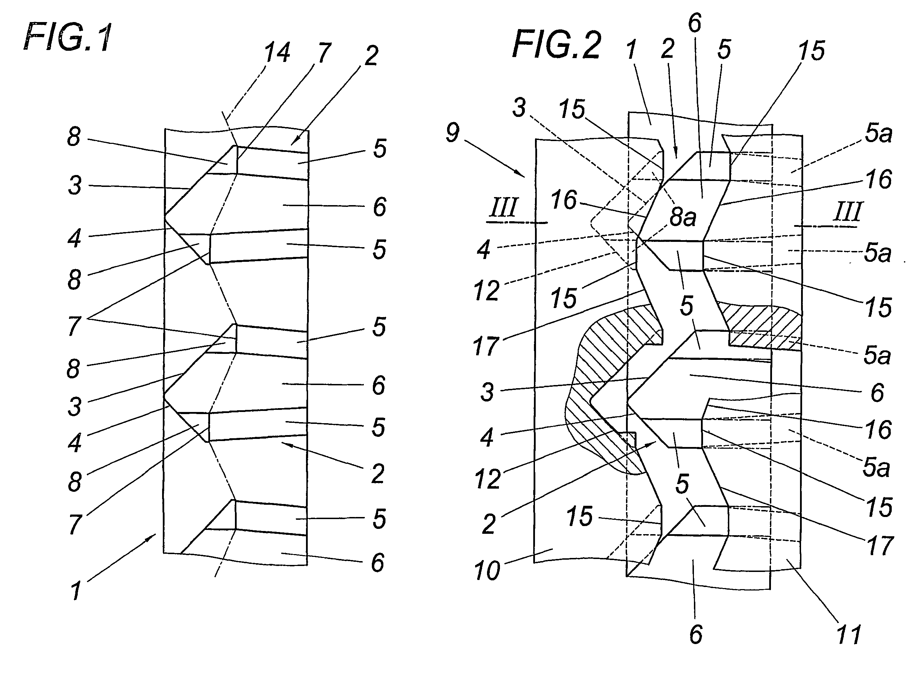

Wie die Fig. 1 erkennen läßt, weist der gesinterte Kupplungsring 1 einen Kranz von Kupplungszähnen 2 auf, die an einer Stirnseite keilförmige Stirnflächen 3, 4 bilden, die sich in einer außerhalb der Zahnmitte verlaufenden Axialebene schneiden, so daß sich für die keilförmigen Stirnflächen 3, 4 eine asymmetrische Anordnung ergibt. Diese Stirnflächen 3, 4 gehen in Flanken 5 über, die vom Zahnrücken 6 gegen den Zahnfuß hin abfallen und rückgenommen sind. Die rückgenommenen Flanken 5 werden durch einspringende Schultern 7 begrenzt, die jeweils in einer achsnormalen Ebene verlaufen und die rückgenommenen Flanken 5 von einem an die Stirnflächen 3, 4 anschließenden, achsparallelen, im wesentlichen dreieckförmigen Flankenteil 8 trennen. Die Höhe der Schulter 7 kann dabei klein ausfallen und beispielsweise zwischen 0,01 und 0,2 mm betragen.

Zur Herstellung der von den Schultern 7 begrenzten Flankenrücknahmen wird gemäß der Fig. 2 von einem gesinterten Kupplungsring 1 ausgegangen, dessen Kupplungszähne 2 achsparallele Flanken 5 aufweisen. Zum Formpressen der durch Schultern 7 abgesetzten, rückgenommenen Flanken 5 dient ein Formwerkzeug 9 aus zwei Formteilen 10 und 11, von denen der Formteil 10 die Hohlform 12 für die Kupplungszähne 2 im Bereich der keilförmigen Stirnflächen 3, 4 und der andere Formteil 11 die Hohlform 13 für die Kupplungszähne 2 im Bereich der rückgenommenen Flanken 5 bilden. Die den Keilflächen 3, 4 entsprechenden Formflächen des Formteils 10 sind mit 3a und 4a bezeichnet, während die den dreieckförmigen Flankenteilen 8 entsprechenden Formflächen mit 8a bezeichnet sind. Die den rückgenommen Flanken 5 zugehörigen Formflächen des Formteils 11 weisen das Bezugszeichen 5a auf.

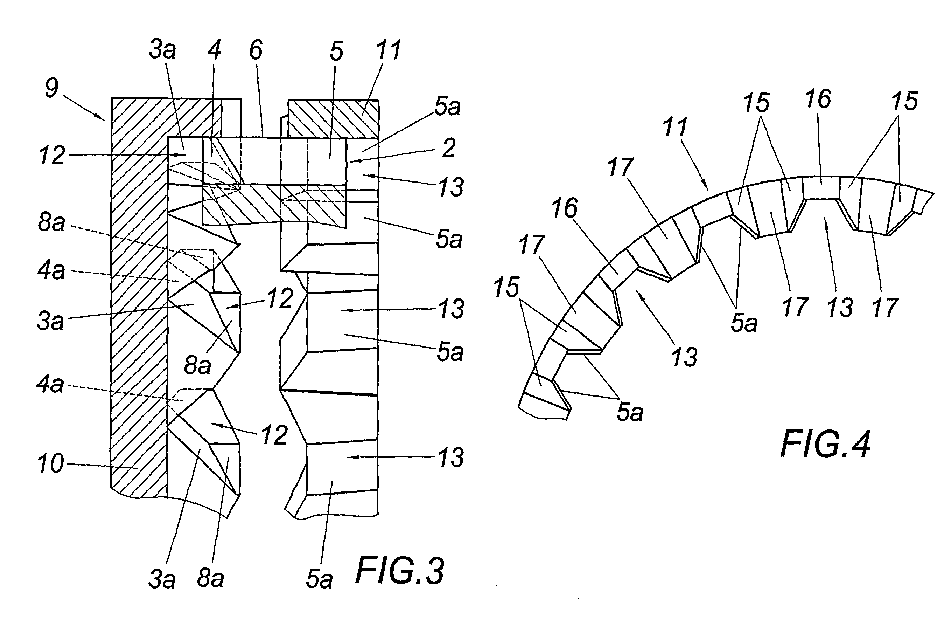

Aufgrund der achsnormal verlaufenden Schultern 7 der Flanken 5 ergibt sich für die Teilungsflächen zwischen den beiden Formteilen ein Verlauf 14, wie er in Fig. 1 strichpunktiert eingezeichnet ist. Aus diesem Verlauf 14 ist zu entnehmen, daß die Teilungsflächen im Bereich der Schultern 7 achsnormale, ebene Abschnitte 15 aufweisen, die durch gegensinnig geneigte Abschnitte 16 und 17 im Bereich der Zahnrücken 6 und der Zahnlücken verbunden sind, wie dies insbesondere den Fig. 2 und 4 entnommen werden kann.

Aufgrund dieser aus den ebenen Abschnitten 15, 16 und 17 zusammengesetzten Teilungsfläche der Formteile 10 und 11 können die von den einspringenden Schultern 7 ausgehenden Flankenrücknahmen in vorteilhafter Weise durch eine Preßformung hergestellt werden. Die gegensinnig geneigten Abschnitte 16 und 17 bedingen dabei einer gegenseitige Selbstzentrierung der Formteile 10 und 11, so daß sich insgesamt einfache Herstellungsbedingungen unter einer Sicherstellung einer hohen Fertigungsgenauigkeit ergeben.

## Patentansprüche

1. Gesinterter Kupplungsring (1) mit einem Kranz von Kupplungszähnen (2), die keilförmige, sich in einer Axialebene schneidende Stirnflächen (3, 4) und unter einem Neigungswinkel vom Zahnrücken (6) gegen den Zahnfuß abfallende Flanken (5) aufweisen, wobei die Flanken (5) ausgehend von einer einspringenden, achsnormalen Schulter (7) rückgenommen sind, **dadurch gekennzeichnet, daß** die Schnittebenen zwischen den keilförmigen Stirnflächen (3, 4) außerhalb der Zahnmitte verlaufen und daß die gegeneinander axial versetzen Schultern (7) der beiden Flanken (5) der Kupplungszähne (2) die rückgenommenen Flanken (5) von einem an die Stirnflächen (3, 4) anschließenden, achsparallelen, im wesentlichen dreieckförmigen Flankenteil (8) trennen.

2. Formwerkzeug (9) zum Herstellen eines Kupplungsringes (1) nach Anspruch 1 mit zwei axial gegeneinander preßbaren Formteilen (10, 11), von denen einer die Hohlform (12) für die Kupplungszähne (2) im Bereich der keilförmigen Stirnflächen (3, 4) und der andere die Hohlform (13) für die Kupplungszähne (2) im Bereich der rückgenommenen Flanken (5) bilden, wobei die Teilungsfläche zwischen den beiden Formteilen (10, 11) entlang der die rückgenommenen Flanken (5) begrenzenden achsnormalen Schultern (7) verläuft, **dadurch gekennzeichnet, daß** die Teilungsfläche zwischen den beiden Formteilen (10, 11) aus ebenen Abschnitten (15, 16, 17) zusammengesetzt ist, die im Flankenbereich entlang der einspringenden Schultern (7) achsnormal und im Bereich der Zahnrücken (6) und der Zahnlücken zwischen diesen gegeneinander axial versetzten Abschnitten (15) entsprechend der axialen Versetzung zur Achsrichtung geneigt verlaufen.

## Claims

1. Sintered clutch ring (1) having a rim of clutch teeth (2) which have wedge-shaped end surfaces (3, 4) intersecting in an axial plane and flanks (5) which slope downwards at an angle of inclination from the tooth back (6) towards the tooth root, wherein the flanks (5) are relieved starting from a re-entrant, axially normal shoulder (7), **characterised in that** the sectional planes between the wedge-shaped end surfaces (3, 4) extend outside of the centre of the tooth, and **in that** the shoulders (7), which are axially offset with respect to each other, of the two flanks (5) of the clutch teeth (2) separate the relieved flanks (5) from a substantially triangular, axially parallel flank portion (8) which is adjacent to the end surfaces (3, 4).

2. Forming tool (9) for producing a clutch ring (1) as claimed in Claim 1, having two mould parts (10, 11) which can be axially pressed against each other, wherein one of the mould parts forms the hollow mould (12) for the clutch teeth (2) in the region of the wedge-shaped end surfaces (3, 4) and the other mould part forms the hollow mould (13) for the clutch teeth (2) in the region of the relieved flanks (5), wherein the partition surface between the two mould parts (10, 11) extends along the axially normal shoulders (7) which delimit the relieved flanks (5), **characterised in that** the partition surface between the two mould parts (10, 11) is composed of planar portions (15, 16, 17) which extend in an axially normal manner in the flank region along the re-entrant shoulders (7) and extend in the region of the tooth backs (6) and the tooth spaces in an inclined manner between these mutually axially offset portions (15) corresponding to the axial offset with respect to the axial direction.

## Revendications

1. Bague d'accouplement (1) frittée, avec une couronne de dents d'accouplement (2), présentant des faces frontales (3, 4) en forme de coins, se coupant en un plan axial, et des flancs (5), descendant des dos de dent (6) vers le pied de dent en faisant un angle d'inclinaison, les flancs (5) étant en retrait en partant d'un épaulement (7) normal à l'axe, orienté vers l'intérieur, **caractérisée en ce que** les plans de coupe entre les faces frontales (3, 4) en forme de coins s'étendent à l'extérieur des centres de dent, et **en ce que** les épaulements (7), décalés axialement les uns par rapport aux autres, des deux flancs (5) des dents d'accouplement (2) séparent les flancs (5) en retrait d'une partie de flanc (8) à forme sensiblement triangulaire, parallèle à l'axe, se raccordant aux faces frontales (3, 4).

2. Outil de formage (9) pour fabriquer une bague d'accouplement (1) selon la revendication 1, avec deux parties de forme (10, 11) susceptibles de presser axialement l'une contre l'autre, dont l'une constitue la forme en creux (12) des dents d'accouplement (2) dans la zone des faces frontales (3, 4) en forme de coins et l'autre constitue la forme en creux (13) des dents d'accouplement (2) dans la zone des flancs (5) en retrait, la surface de séparation entre les deux parties de forme (10, 11) s'étendant le long des épaulements (7) normaux à l'axe, délimitant les flancs (5) en retrait, **caractérisé en ce que** la surface de séparation entre les deux parties de forme (10, 11) est composée de tronçons (15, 16, 17) plans, s'étendant, dans la zone de flanc, le long des épaulements (7) orientés vers l'intérieur, de façon normale à l'axe et, dans la zone des dos de dent (6) et des intervalles entre-dents situés entre ces tronçons (15) décalés axialement l'un par rapport à l'autre, de façon inclinée par rapport à la direction axiale de manière correspondante au décalage axial.
